# EUROPEAN PATENT APPLICATION

(11) **EP 3 816 846 A1**
(43) Date of publication of application: **05.05.2021**
(21) Application number: 19206375.8
(22) Date of filing: 30.10.2019
(51) Int. Cl.: G06K 9/00, G07C 9/37, H04L 9/32, G06F 21/32

(54) **METHOD AND APPARATUS OF CLOUD DATA PRIVACY MANAGEMENT SYSTEM**

(71) Applicant: Chen, Yu-Ta, Taichung City 427 (TW)
(72) Inventor: Chen, Yu-Ta, Taichung City 427 (TW); Yen, Chang-Fong, Kaohsiung City 807 (TW)
(74) Representative: Lang, Christian

(57) **Abstract**

In a method and apparatus of cloud data privacy management system, the method includes steps of: using an information capture unit to capture and provide at least one biometric data and identification data of at least one human body at a first time by a user; receiving the human biometric data and identification data and calculating the human biometric data of the first time to create at least one algorithm result data for later identifying the human biometric data of the first time by a calculation unit; detecting the reliability of the algorithm result data and providing the algorithm result data by a crawler detection unit; receiving and storing the algorithm result data and then deleting the human biometric data from the calculation unit by an information collection center.

## Description

### FIELD OF INVENTION

The present disclosure relates to an electronic date management system, in particular to a method and apparatus of a cloud data privacy management system applied to human biometric.

### BACKGROUND OF INVENTION

### Description of the Related Art

As electronic and Internet technologies boom, information can be accessed by various different portable electronic products such as a mobile phone, a smart phone, a mobile Internet device (MID), a tablet PC, personal digital assistant (PDA), an e-book, a digital photo frame, a digital walkman, an electronic dictionary, a global positioning system (GPS) navigator via the Internet to satisfy our multi-faceted work and entertainment requirements and enrich the consumer market.

Furthermore, the fast development of wafer process technology and computer cooling efficiency also improves the computing speed and storage capacity of computers, so that big data and their corresponding computer programs can be obtained easily in the market, and a statistical analysis of the obtained information can be computed immediately for the analysis of consumer behavior, and human physiological condition, human psychological condition, etc. In addition, the improved computing speed and storage capacity of the computers allow artificial intelligence (AI) to establish a calculation mechanism to be applied to meet different functional requirements including the correctness of human biometric for door security systems, the safety of unmanned vehicles for transportation systems, and the immediacy of materials/finished product management for warehouse systems, and thus AI becomes a mainstream trend again. However, how to protect or prevent the calculation mechanism created by the public cloud server from being stolen or used without authorization demands immediate attentions and feasible solutions.

In view of the aforementioned drawbacks of the prior art, the team of the present disclosure based on years of experience in the related industry to conduct extensive research and experiment, and finally developed a method and apparatus of a cloud data privacy management system in accordance with the present disclosure to overcome the drawbacks of the prior art.

### Summary of the Invention

Therefore, it is a primary objective of the present disclosure to provide a method and apparatus of cloud data privacy management system capable of deleting human biometric data from a public server immediately, avoiding or minimizing the risk of the human biometric data from being stolen.

To achieve the aforementioned and other objectives, this disclosure provides a method and apparatus of cloud data privacy management system, and the method comprises the following steps: A user uses an information capture unit to capture at least one biometric data and identification data of at least one human body at a first time and provide the human biometric data and identification data; a calculation unit receives the human biometric data and identification data and calculates the human biometric data of the first time to create at least one algorithm result data for later identifying the human biometric data of the first time; a crawler detection unit detects the reliability of the algorithm result data and provides the algorithm result data and the corresponding identification data; an information collection center receives/downloads and stores the algorithm result data and the corresponding identification data and starts to delete the human biometric data from the calculation unit; an information identification unit receives at least one biometric data of at least one human body captured by the information capture unit at a second time and compares the human biometric data of the second time with the algorithm result data; and the information identification unit drives a device electrically coupled to the information identification unit to execute an action when the human biometric data of the second time matches with the algorithm result data.

### BRIEF DESCRIPTION OF THE DRAWINGS

FIG. 1 is a schematic view of an apparatus of a cloud data privacy management system of this disclosure; and
FIG. 2 is a flow chart of a method of a cloud data privacy management system of this disclosure.

### DESCRIPTION OF THE PREFERRED EMBODIMENTS

To make it easier for our examiner to understand the technical content of this disclosure, we use preferred embodiments together with the attached drawings for the detailed description of this disclosure.

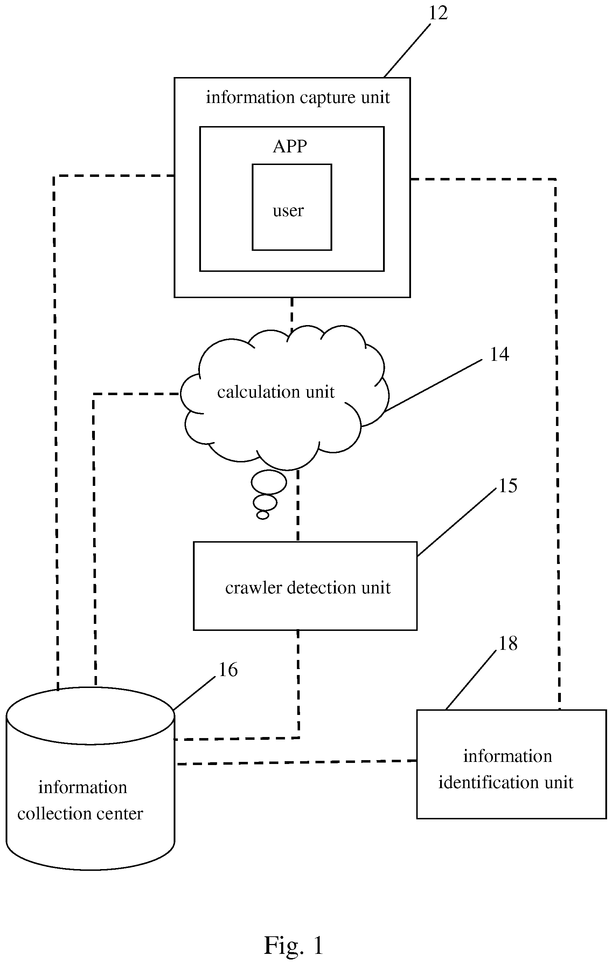

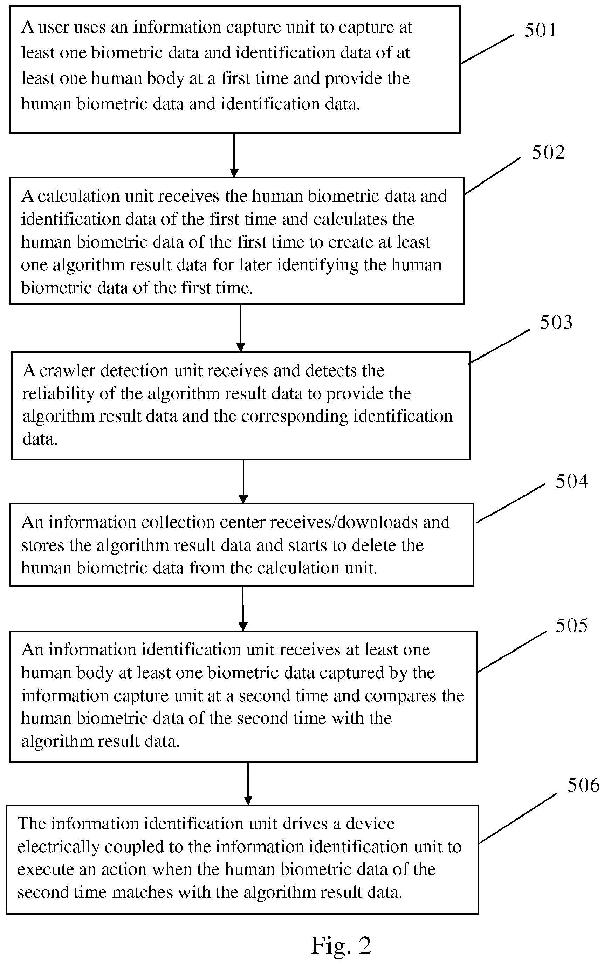

With reference to FIGS. 1 and 2 for an apparatus and method of cloud data privacy management system in accordance with this disclosure respectively, the apparatus comprises an information capture unit 12, a calculation unit 14, a crawler detection unit 15, an information collection center 16 and an information identification unit 18.

The information capture unit 12 is provided for a user to capture at least one biometric data of at least one human body at a first time and provide the human biometric data and identification data, wherein the information capture unit 12 of this embodiment may be a smart phone, a tablet PC or an electronic device with an image capture function such as a surveillance camera having a central processing unit for downloading or storing an application program (APP) and capturing the human biometric data including an image of a face, an iris, a fingerprint, a palm print, a voiceprint or any combination of the above, and the application program (APP) transmits the human biometric data via a wireless or cable transmission.

In general, the user must enter the user's predetermined identification data such as a username, a password, a telephone number, or any combination of the above from the application program (APP) of the information capture unit 12 before the user can use the application program (APP) or the system of this disclosure. In other words, the entered identification data must match with the identification data already stored in the system of this disclosure before the user can use the system of this disclosure to capture the human biometric data.

The calculation unit 14 is electrically coupled to the information capture unit 12 for receiving the human biometric data and identification data of the first time, and calculating the human biometric data of the first time to create at least one algorithm result data for later identifying the human biometric data of the first time, and the calculation unit adopts an algorithm or an operation mode such as calculation, data processing, logical reasoning, artificial intelligence processing or any combination of the above to create the algorithm result data. The calculation unit 14 provides algorithm result data and the corresponding identification data. Since the calculation unit 14 is generally a more complicated and bigger software program, therefore the calculation unit 14 is preferably installed to a first server having a larger storage space and a faster computing speed, such as a cloud server of the Internet side.

The crawler detection unit 15 is electrically coupled to the calculation unit 14 and the information collection center 16, for detecting the reliability of the algorithm result data and then further providing the algorithm result data and the corresponding identification data to the information collection center 16.

The information collection center 16 such as a second server is electrically coupled to the crawler detection unit 15. The information collection center 16 is for receiving/downloading and storing the information such as the algorithm result data and/or the corresponding identification data provided by the crawler as well as providing the received/downloaded and stored information such as the algorithm result data and/or the identification data. Wherein, the second server is a private server with a better firewall to avoid or minimize the risk of its data from being stolen.

The information identification unit 18 is electrically coupled to the information capture unit 12 and the information collection center 16 for at least receiving at least one biometric data of at least one human body captured by the information capture unit 12 at a second time and then comparing the human biometric data of the second time with the algorithm result data. If the human biometric data of the second time matches with the algorithm result data of the algorithm result data, then the information identification unit 18 will drive a device such as a door, an electric appliance, an automatic teller machine, a car or a parking lot gate electrically coupled to the information identification unit 18 to execute an action, wherein the human biometric data of the second time includes an image of a face, an iris, a fingerprint, a palm print, a voiceprint or any combination of the above.

In the apparatus of a cloud data privacy management system in accordance with this disclosure, the information collection center 16 receives/downlows the algorithm result data and then follows the identification data of the human biometric data to start to delete the human biometric data from the calculation unit 14. In other words, this disclosure creates the algorithm result data by the public first server having a larger storage space and a faster computing speed and stores the algorithm result data in the private second server, and then this disclosure deletes the human biometric data from the public first server to avoid or minimize the risk of the human biometric data from being stolen. Wherein, this closure can st up a Micro Control Unit or Microprocessor Control Unit electrically coupled to the information collection center 16 to start to delete the human biometric data from the calculation unit 14.

The aforementioned apparatus of this disclosure is electrically coupled via a cable or wireless transmitting and receiving mode or by a wireless communication service technology such as 3G, 4G or 5G with a wireless network function.

In the apparatus of this disclosure, the information capture unit 12 includes a man-machine interface such as a touch screen or a screen with a plurality of press keys provided for the operating and viewing functions.

In the apparatus of this disclosure, the wireless transmitting and receiving mode is a mode of Bluetooth Low Energy (BLE) or SublG (below the frequency of 1GHz) with the power-saving, low-price and simple features.

With reference to FIG. 2 for the method and apparatus of cloud data privacy management system in accordance with this disclosure, the method comprises the following steps:
Step 501: The user uses the information capture unit 12 to capture at least one biometric data and identification data of at least one human body at the first time and provide the human biometric data and identification data.
Step 502: The calculation unit 14 receives the human biometric data and identification data of the first time and calculates the human biometric data of the first time to create at least one algorithm result data for later identifying the human biometric data of the first time.
Step 503: The crawler detection unit 15 receives and detects the reliability of the algorithm result data to provide the algorithm result data and the corresponding identification data.
Step 504: The information collection center 16 receives/downloads and stores the algorithm result data and starts to delete the human biometric data from the calculation unit 14.
Step 505: The information identification unit 18 receives at least one human body at least one biometric data captured by the information capture unit 12 at the second time and compares the human biometric data of the second time with the algorithm result data.
Step 506: The information identification unit 18 drives a device electrically coupled to the information identification unit 18 to execute an action when the human biometric data of the second time matches with the algorithm result data.

## Claims

1. An apparatus of a cloud data privacy management system, comprising:
an information capture unit, provided for a user to capture at least one biometric data and identification data of at least one human body at a first time and provide the human biometric data and identification data;
a calculation unit, electrically coupled to the information capture unit, for receiving the human biometric data and identification data of the first time and calculating the human biometric data of the first time to create at least one algorithm result data for later identifying the human biometric data of the first time, wherein the calculation unit adopts an operation mode being selected from a group consisting of calculation,
data processing, logical reasoning, artificial intelligence process and any combination of the foregoing to create the algorithm result data, and the calculation unit provides the algorithm result data and the corresponding identification data ;
a crawler detection unit, electrically coupled to the calculation unit, for detecting the reliability of the algorithm result data, and providing the algorithm result data and the corresponding identification data;
an information collection center, electrically coupled to the crawler detection unit, for receiving/downloading and storing the algorithm result data and the corresponding identification data, and providing the algorithm result data;
an information identification unit, electrically coupled to the information capture unit and the information collection center, for at least receiving at least one biometric data of at least one human body captured by the information capture unit at a second time and comparing the human biometric data of the second time with the algorithm result data, and when the human biometric data of the second time matches with the algorithm result data, the information identification unit drives an apparatus electrically coupled to the information identification unit to execute an action; and
wherein, the information collection center deletes the human biometric data from the calculation unit after receiving/downloading and storing the algorithm result data.

2. The apparatus of a cloud data privacy management system as claimed in claim 1, wherein the human biometric data of the first time and the second time are information selected from a group consisting of a face image, an iris, a fingerprint, a palm print, a voiceprint, and any combination of the foregoing.

3. A method of a cloud data privacy management system, comprising steps of:
(a) a user using an information capture unit to capture at least one biometric data and identification data of at least one human body at a first time and provide the human biometric data and identification data;
(b) a calculation unit receiving the human biometric data and identification data of the first time and calculating the human biometric data of the first time to create at least one algorithm result data for later identifying the human biometric data of the first time;
(c) a crawler detection unit receiving and detecting the reliability of the algorithm result data to provide the algorithm result data the corresponding identification data;
(d) an information collection center receiving/downloading and storing the algorithm result data and starting to delete the human biometric data from the calculation unit;
(e) an information identification unit receiving at least one biometric data of at least one human body captured by the information capture unit at a second time and comparing the human biometric data of the second time with the algorithm result data; and
(f) the information identification unit driving a device electrically coupled to the information identification unit to execute an action, when the human biometric data of the second time matches with the algorithm result data.

4. The method of a cloud data privacy management system as claimed in claim 3, wherein the calculation unit uses a method being selected from a group consisting of calculation, data processing, logical reasoning, artificial intelligence processing and any combination of the foregoing to create the algorithm result data.

5. The method of a cloud data privacy management system as claimed in claim 3, wherein the human biometric data of the first time and the second time are information selected from a group consisting of a face, an iris, a fingerprint, a palm print, a voiceprint and any combination of the foregoing.

6. The method of a cloud data privacy management system as claimed in claim 4, wherein the human biometric data of the first time and the second time are information selected from a group consisting of a face, an iris, a fingerprint, a palm print, a voiceprint and any combination of the foregoing.
